# EUROPEAN PATENT SPECIFICATION

(11) **EP 3 636 465 B1**
(45) Date of publication and mention of the grant of the patent: **27.04.2022**
(21) Application number: 19198727.0
(22) Date of filing: 20.09.2019
(51) Int. Cl.: B60G 13/16, F16F 7/104

(54) **INERTIAL SUSPENSION MAGNETIC STABILIZER**
MAGNETISCHER STABILISATOR FÜR TRÄGHEITSAUFHÄNGUNG
STABILISATEUR MAGNÉTIQUE DE SUSPENSION INERTIELLE

(30) Priority: 20.09.2018 AR P180102688
(43) Date of publication of application: 15.04.2020
(73) Proprietor: Agra, Luis Alberto, 643 Olmos (AR); Barbery, Juan Jose, 7400 Olavarria (AR)
(72) Inventor: Agra, Luis Alberto, 643 Olmos (AR); Barbery, Juan Jose, 7400 Olavarria (AR)
(74) Representative: Leihkauf, Steffen Falk

(56) References cited:
- GB-A- 771 663
- JP-A- S6 396 336
- US-A1- 2016 069 409

## Description

This invention relates to a very simple mechanism complementing the suspensions in vehicles and mobiles to soften the sudden pounding in depressions, holes, wells, and others road features, which cause cuts and marks to tires and inner tubes, in addition to the strong and abrupt rebounds of vehicle, passengers and load.

Such rebounds are currently softened, counteracted, by typical, relatively complicated, standard mechanical shock-absorbing systems installed in vehicles primarily from the factory.

GB771663A describes a coil spring based inertial suspension stabilizer and JPS6396336A describes an inertial vibration absorber having a sliding piston and a fixed permanent magnet.

Our stabilizing mechanism is obtained by the reaction - opposition of the inertia of magnetic bodies installed in a sliding floating mass inside a hollow cylinder. The mass inertially opposing the sudden initial impulse of the rebound force produced and initiated by the abnormal and unexpected movements of moving bodies.

The cylinder containing magnets mounted on a mass slidably suspended in the inside thereof by means of magnetic repulsion effects which such magnets produce by reacting with magnets preferably fastened to the inner ends (the hubcaps) of the cylinder or hollow body in this embodiment.

Such stabilizer will have a size and shape adapted to the mobile where it is placed.

One manner to build it is to use a cylindrical tubular body, provided at each inner end thereof with magnets. Containing, also in the central area thereof, a sliding mass, not conductive of magnetic effects, bearing, at the ends thereof, magnets with the same polarity at the free ends thereof as the one they face at the ends of the cylinder.

Such sliding mass divides the inside of the cylinder into two hermetic chambers connected to each other by means of a tubular duct provided with a valve regulating the passage of the working fluid between each chamber (air, gas, liquids, etc.).

### FIGURES

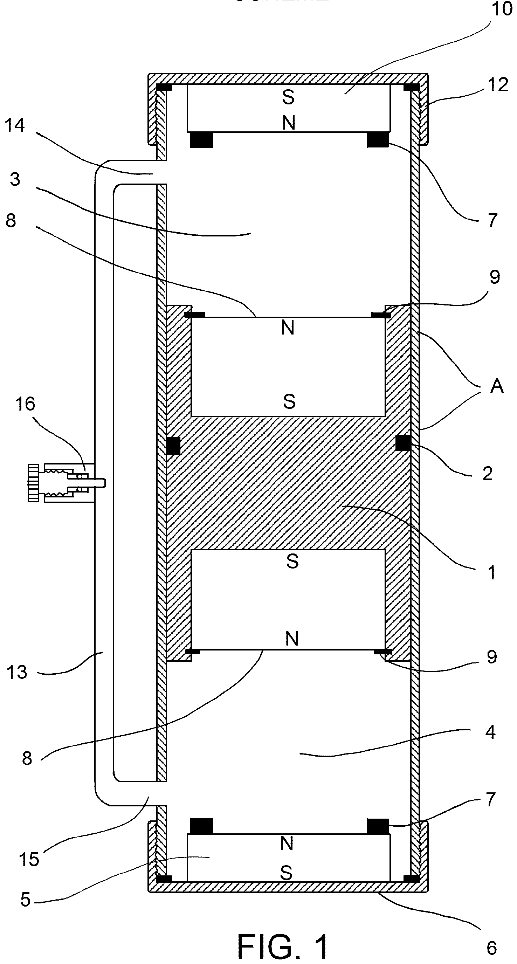

The Figure conceptually shows a central longitudinal section of the inertial magnetic suspension stabilizer.

REFERENCES: in the following documentation the same letters and the same numbers indicate equal, or similar, or corresponding parts. OPERATION: having described the components and having explained the nature of the invention, the functional and operational relationship thereof is described.

The present invention is firmly mounted to the means suspensively bearing the wheel axle in order to complement the work of the shock-absorber provided in the vehicles; or, by acting complementing the shock-absorber installed and provided by the factory of origin, it is achieved that the support of the assembly is maintained against the ground for a longer time, thus reducing the vibrations produced by the shock-absorbers, softening the typical standard suspensions. (Fractions of a second).

The cylinder body may be provided with means for attaching it to the wheel axle support with which vehicles or parts of other mobile products are equipped from the factory.

Inside the cylinder, a non-magnetizable piston acts freely and slidably, bearing magnets at each end thereof. Such magnet-bearing pistons have a weight and size determined by the size and type of the vehicles (proportional to the weight that the mobile or wheel axle bears).

The piston "floats" magnetically held in a sliding manner inside the cylinder A, occupying part of the volume thereof, defining inside the cylinder two air chambers, one upper and one lower, so that they act as shock-absorbing factors.

The tubular cylinder A, closed at the ends thereof, slidably contains in the inside thereof a piston 1, of a non-magnetically conductive material (bronze, aluminum, plastic, ... not ferrous).

Such piston being provided, on the external sliding wall thereof, with seals 2, of the UPACKIG type, or equivalent, which act as tight separator of the air of the chamber 3 and of the chamber 4.

Such piston 1, made of non-magnetically conductive material, has, at the ends thereof, magnets 8 mounted with the polarities thereof oriented facing the equal ones of the magnets of the hubcaps, but not together; for example, the negatives N, mounted on the ends of the piston 1, facing the N of the magnets placed in the inner parts of the hubcaps 11 and 12. Since such piston is slidable, the air chamber 3, located in the upper part of the Figure, and the chamber 4, in the lower part, may be alternately compressed by the assembly integrating the piston, thereby the magnets N thereof may, in turn, be approached by the rebound in the direction towards the ground, compressing and dislodging the air of the respective chamber 4, squeezing it, sending the air to the chamber 3, while it possibly collides against the magnet 5, positioned and fastened in a hubcap 6.

Such magnet of the hubcap is covered by a plastic washer 7, which acts as a shock-absorbing defense against the impact of the end 8, of the magnet held by a nonferrous, non-conductive thin washer 9 against the pole N of the magnet of such piston tip. When approaching and touching the pole N of the magnet 5, it is braked and repelled towards the central area of the hollow cylinder.

At the other end of the piston 1, the magnets act similarly, but in the opposite position. The air chamber 3 has the upper hubcap 12, in which the magnet 10 is fixedly mounted.

Both magnets 5 and 10 each have, in turn, in the inner part thereof, towards the chambers 3 and 4, not conductive washers or plastic caps.

The lower chamber 4 operates similarly. The magnets are removable, whether they are screwed or fitted. The faces 8 of the magnets are locked and held by washers 9, or other non-conductive means.

The magnets 5 and 10 are fastened by adhesion and/or by screws, or other means.

The air chambers 3 and 4 are connected, to enable the passage of air therebetween, through a tubular means 13, which has access to the chamber 3 by means of the mouth 14 thereof, and the chamber 4, by means of the mouth 15 thereof. Such strong tube 13, has a valve 16 hermetically mounted thereon, which allows regulating the amount of air which the tube will allow to pass in any direction.

Such shock-absorber is of universal use, nothing prevents such inertial magnetic suspension stabilizer from being mounted on the supports of the skis of snow or water vehicles and therefore also on boat hulls (preferably inside the bows) or in the ankles of a human or of an animal.

So far, a manner to build it and, conceptually, the operation thereof has been explained.

The documentation is completed with the synthesis of the invention contained in the following claims.

## Claims

1. An inertial magnetic suspension stabilizer complementing the suspension of vehicles and mobiles of different type, inertially opposing and compensating sudden impulses; mountable to hubcaps or to the wheel axle support, preferably constructed in a body preferably forming a hollow cylinder (A) containing gaseous or liquid fluids, **characterized in that** it includes a hermetic tubular body (A) provided, at the ends thereof, with fixed magnets (5;10), and, at the central area thereof, with a magnetically neutral sliding piston (1), bearing at the ends thereof magnets (8) with equal polarity, and facing the one of the magnets (5;10) fastened at the ends of the tubular body (A); the sliding piston (1) dividing, at the same time, the tubular body (A) into two hermetic chambers (3;4) connected by a tube (13) provided with a fluid regulating valve (16),
**characterized in that** the non-magnetic piston (1) has, at the ends thereof, magnets (8) mounted with the polarities thereof oriented facing the ones of equal polarity of the magnets (5;10) mounted on the ends (6, 12) of the cylinder (A).

2. An inertial magnetic suspension stabilizer according to claim 1, further **characterized in that** the sliding piston (1) is suspended in the middle area of the inside of the tubular body (A), by means of the magnetic repulsion of magnets (5;10) fastened at the ends of the tubular body (A).

3. An inertial magnetic suspension stabilizer according to claim 1, further **characterized in that** the sliding piston (1) divides the inside of the tubular body (A) into two chambers (3; 4) connected to each other by means of a tube (13) with means (16) for regulating the passage of the fluid between each chamber (3; 4).

4. An inertial magnetic suspension stabilizer according to claim 1, further **characterized in that** the hermetic tubular body (A) is cylindrical.

5. An inertial magnetic suspension stabilizer according to claim 1, further **characterized in that** the sliding piston (1) is provided with a seal (2), which tightly separates the air between the chambers (3; 4).

6. An inertial magnetic suspension stabilizer according to claim 1, further **characterized in that** the sliding piston (1) has extreme positions, alternatively compressing the fluid of the chambers (3; 4) through a tube (13) and a regulating valve (16).

7. An inertial magnetic suspension stabilizer according to claim 1, further **characterized in that** the piston (1) magnets (8) are alternately propelled in a preset direction and position.

8. An inertial magnetic suspension stabilizer according to claim 1, further **characterized in that** the magnets (5;10) of the hubcaps (6, 12) are provided with damping washers (7).

9. An inertial magnetic suspension stabilizer according to claim 1, further **characterized in that** such stabilizer is adapted to the size and weight of the mobile in which it is installed and has a shape and means adapted to fasten it functionally thereto.

## Patentansprüche

1. Magnetischer Trägheitsaufhängungsstabilisator, welcher die Aufhängung von Fahrzeugen und Mobilen verschiedener Art ergänzt, welcher plötzlichen Impulsen bezüglich der Trägheit entgegensteht und diese kompensiert; welcher an Nabenkappen oder der Radachsenhalterung montierbar ist, welcher vorzugsweise in einem Körper ausgebildet ist, der vorzugsweise einen hohlen Zylinder (A) bildet, der gasförmige oder flüssige Fluide enthält, **dadurch gekennzeichnet, dass** er einen hermetischen rohrförmigen Körper (A) umfasst, welcher an den Enden davon mit fixierten Magneten (5; 10) und an dem zentralen Bereich davon mit einem magnetisch neutralen Gleitkolben (1) bereitgestellt ist, welcher an den Enden davon Magnete (8) mit gleicher Polarität lagert und dem einen der Magnete (5; 10) zugewandt ist, welche an den Enden des rohrförmigen Körpers (A) befestigt sind; wobei der Gleitkolben (1) zu der gleichen Zeit den rohrförmigen Körper (A) in zwei hermetische Kammern (3; 4) unterteilt, welche durch eine Rohrleitung (13) verbunden sind, die mit einem Fluidregelventil (16) bereitgestellt ist,
**dadurch gekennzeichnet, dass** der nichtmagnetische Kolben (1) an den Enden davon Magnete (8) montiert hat, wobei Polaritäten davon derart orientiert sind, dass sie denjenigen gleicher Polarität der an den Enden (6, 12) des Zylinders (A) montierten Magnete (5; 10) zugewandt sind.

2. Magnetischer Trägheitsaufhängungsstabilisator nach Anspruch 1, ferner **dadurch gekennzeichnet, dass** der Gleitkolben (1) mittels der magnetischen Abstoßung der Magnete (5; 10), welche an den Enden des rohrförmigen Körpers (A) befestigt sind, in dem mittleren Bereich des Inneren des rohrförmigen Körpers (A) aufgehängt ist.

3. Magnetischer Trägheitsaufhängungsstabilisator nach Anspruch 1, ferner **dadurch gekennzeichnet, dass** der Gleitkolben (1) das Innere des rohrförmigen Körpers (A) in zwei Kammern (3; 4) unterteilt, welche mittels einer Rohrleitung (13) mit Mitteln (16) zum Regeln des Durchtritts von Fluid zwischen jeder Kammer (3; 4) miteinander verbunden sind.

4. Magnetischer Trägheitsaufhängungsstabilisator nach Anspruch 1, ferner **dadurch gekennzeichnet, dass** der hermetische rohrförmige Körper (A) zylindrisch ist.

5. Magnetischer Trägheitsaufhängungsstabilisator nach Anspruch 1, ferner **dadurch gekennzeichnet, dass** der Gleitkolben (1) mit einer Dichtung (2) bereitgestellt ist, welche die Luft zwischen den Kammern (3; 4) dicht trennt.

6. Magnetischer Trägheitsaufhängungsstabilisator nach Anspruch 1, ferner **dadurch gekennzeichnet, dass** der Gleitkolben (1) Endpositionen aufweist, welche das Fluid der Kammern (3; 4) wechselweise durch eine Rohrleitung (13) und ein Regelventil (16) komprimieren.

7. Magnetischer Trägheitsaufhängungsstabilisator nach Anspruch 1, ferner **dadurch gekennzeichnet, dass** die Kolben- (1) Magnete (8) abwechselnd in einer voreingestellten Richtung und Position angetrieben werden.

8. Magnetischer Trägheitsaufhängungsstabilisator nach Anspruch 1, ferner **dadurch gekennzeichnet, dass** die Magnete (5; 10) der Nabenkappen (6, 12) mit Dämpfungsscheiben (7) bereitgestellt sind.

9. Magnetischer Trägheitsaufhängungsstabilisator nach Anspruch 1, ferner **dadurch gekennzeichnet, dass** ein derartiger Stabilisator auf die Größe und das Gewicht des Mobils angepasst ist, in welchem er installiert ist, und eine Form und Mittel aufweist, welche dafür angepasst sind, ihn funktional daran zu befestigen.

## Revendications

1. Stabilisateur magnétique de suspension inertielle complétant la suspension de véhicules et éléments mobiles de différent type, opposant et compensant de manière inertielle des impulsions soudaines ; pouvant être monté sur des enjoliveurs ou sur le support d'essieu de roue, de préférence construit en un corps formant de préférence un cylindre creux (A) contenant des fluides gazeux ou liquides, **caractérisé en ce qu'**il comporte un corps tubulaire hermétique (A) doté, aux extrémités de celui-ci, d'aimants fixés (5 ; 10), et, au niveau de la zone centrale de celui-ci, d'un piston coulissant neutre magnétiquement (1), portant aux extrémités de celui-ci des aimants (8) avec une polarité égale, et faisant face à l'un des aimants (5 ; 10) fixés aux extrémités du corps tubulaire (A) ; le piston coulissant (1) divisant, en même temps, le corps tubulaire (A) en deux chambres hermétiques (3 ; 4) reliées par un tube (13) doté d'une vanne de régulation de fluide (16),
**caractérisé en ce que** le piston non-magnétique (1) présente, aux extrémités de celui-ci, des aimants (8) dont les pôles font faces à des pôles d'aimants (5 ; 10), montés sur les extrémités (6, 12) du cylindre (A), ayant la même polarité.

2. Stabilisateur magnétique de suspension inertielle selon la revendication 1, **caractérisé en outre en ce que** le piston coulissant (1) est suspendu dans la zone médiane de l'intérieur du corps tubulaire (A), au moyen de la répulsion magnétique d'aimants (5 ; 10) fixés aux extrémités du corps tubulaire (A).

3. Stabilisateur magnétique de suspension inertielle selon la revendication 1, **caractérisé en outre en ce que** le piston coulissant (1) divise l'intérieur du corps tubulaire (A) en deux chambres (3 ; 4) reliées l'une à l'autre au moyen d'un tube (13) avec des moyens (16) pour la régulation du passage du fluide entre chaque chambre (3 ; 4).

4. Stabilisateur magnétique de suspension inertielle selon la revendication 1, **caractérisé en outre en ce que** le corps tubulaire hermétique (A) est cylindrique.

5. Stabilisateur magnétique de suspension inertielle selon la revendication 1, **caractérisé en outre en ce que** le piston coulissant (1) est doté d'un joint étanche (2) qui sépare hermétiquement l'air entre les chambres (3 ; 4).

6. Stabilisateur magnétique de suspension inertielle selon la revendication 1, **caractérisé en outre en ce que** le piston coulissant (1) présente des positions extrêmes, compressant en alternance le fluide des chambres (3 ; 4) à travers un tube (13) et une vanne de régulation (16).

7. Stabilisateur magnétique de suspension inertielle selon la revendication 1, **caractérisé en outre en ce que** les aimants (8) de piston (1) sont propulsés en alternance dans une direction et une position prédéfinies.

8. Stabilisateur magnétique de suspension inertielle selon la revendication 1, **caractérisé en outre en ce que** les aimants (5 ; 10) des enjoliveurs (6, 12) sont dotés de rondelles d'amortissement (7).

9. Stabilisateur magnétique de suspension inertielle selon la revendication 1, **caractérisé en outre en ce qu'**un tel stabilisateur est adapté à la taille et au poids de l'élément mobile, dans lequel il est installé et présente une forme et des moyens adaptés pour le fixer fonctionnellement à celui-ci.
